# EUROPÄISCHE PATENTANMELDUNG

(11) **EP 1 895 176 A2**
(43) Veröffentlichungstag der Anmeldung: **05.03.2008**
(21) Anmeldenummer: 07112528.0
(22) Anmeldetag: 16.07.2007
(51) Int. Cl.: F16C 13/00, D21G 1/02

(54) **Stützquellensystem für eine Durchbiegungsausgleichswalze**

(30) Priorität: 02.09.2006 DE 102006041239
(71) Anmelder: Voith Patent GmbH, 89522 Heidenheim (DE)
(72) Erfinder: Hoppermann, Andreas, 41751, Viersen (DE)

(57) **Zusammenfassung**

Die Erfindung betrifft ein Stützquellensystem für eine Durchbiegungsausgleichswalze, die einen drehbar gelagerten Walzenmantel (1) aufweist, ein feststehendes, vom Walzenmantel umschlossenes Joch (2) sowie mehrere Stützquellen (3,3'), die zwischen Walzenmantel (1) und Joch (2) über die Walzenbreite verteilt angeordnet sind
- mit einem Stützschuh (8), der sich gegen die Innenfläche (10) des Walzenmantels (1) abstützt und gegen diese hin offene Lagertaschen (9) aufweist sowie Kapillarbohrungen (13), die an den Lagertaschen (9) münden;
- mit einer mit dem Stützschuh (8) fest verbundenen oder einteiligen zylindrischen Buchse (6), die in eine Gleitbohrung (4) im Joch (2) eintaucht, und die einen Druckmediumanschluss (12) zum Leiten eines Druckmediums zu den Lagertaschen (9) aufweist.

Die Erfindung ist gekennzeichnet durch die folgenden Merkmale:
- die Buchse (6) umschließt einen Hohlraum, der sich über die gesamte Buchsenlänge oder einen wesentlichen Teil hiervon erstreckt;
- der Hohlraum weist Führungsflächen (14) auf, die gegen die Längsachse (15) der Buchse (6) geneigt sind.

## Beschreibung

Die Erfindung betrifft das Gebiet der Walzen, die mit Mitteln versehen sind, um beim Einsatz als Presswalze einen Ausgleich oder ein Einstellen der Durchbiegung zu erzielen. Solche Walzen werden beispielsweise in der Textilindustrie, aber auch in der Papierindustrie eingesetzt. Auf den Oberbegriff von Anspruch 1 wird verwiesen.

Walzen dieser Art sind beispielsweise aus US 38 85 283 und aus US 38 02 044 bekannt geworden.

DE 27 25 573 A1 beschreibt ebenfalls eine Walze dieser Art. Dabei sind die Buchsen, welche die Stützkraft vom Joch auf den Stützschuh übertragen, mit Bohrungen versehen. Die Bohrungen führen das Arbeitsmedium - im allgemeinen ein Öl - von einer Zentralbohrung im Joch zu den Taschen des Stützschuhs. Sie sind von relativ geringem Durchmesser und sie verlaufen unter einer Neigung gegen die Längsachse der Buchse und somit gegen die Buchsen-Anpressrichtung. Durch die Neigung soll bei allen möglichen räumlichen Anordnungen der Walze eine Entlüftung des Druckmediums erzielt werden, zum Beispiel dann, wenn die Stützquellen "auf dem Kopf stehen", das heißt sich nicht über, sondern unter dem Joch befinden.

Die Entlüftung der Stützquellen verläuft jedoch bei der genannten bekannten Durchbiegungsausgleichswalze nicht in optimaler Weise. Vielmehr kommt es nach wie vor zu Luftansammlungen. Diese führen zu einer Elastizität des Arbeitsverhaltens der Walze aufgrund der Kompressibilität von eingeschlossener Luft.

Der Erfindung liegt die Aufgabe zugrunde, bei einer Durchbiegungsausgleichswalze der genannten Bauart die Stützquellen derart zu gestalten, dass im Druckmedium enthaltene Luft einwandfrei abgeführt wird und sich somit nicht auf dem Strömungswege festsetzt, beispielsweise in toten Winkeln.

Diese Aufgabe wird durch die Merkmale von Anspruch 1 gelöst.

Wichtig ist, dass die Führungsflächen auf dem Strömungswege derart geneigt sind, dass etwa vorhandene Luftblasen in jedem Falle nach oben geleitet werden. Dies wird beispielsweise dadurch erzielt, dass Führungsflächen des Strömungskanals - in einem zur Längsachse der Anpressbuchse gelegten Schnitt gesehen - geneigt sind. Die Führungsflächen sollten wenigstens derart gestaltet sein, dass sie auf dem Strömungswege des Mediums Abschnitte enthalten, auf welchen eine Aufwärtsströmung des Druckmediums stattfindet.

Der Erfinder hat erkannt, warum die Ausführungsform gemäß DE 27 25 573 A1 das Problem nicht löst. Dort ist in den Figuren 2 und 4 eine Konfiguration dargestellt, bei welcher die Längsachsen der Stützquellen in einer Horizontalebene liegen. Es sind zwei Führungskanäle für das Druckmedium vorgesehen, beide gegen die Längsachse oder Stützrichtung der Buchse geneigt verlaufend. Dabei erfüllt einer der Kanäle die Forderung, dass sich der Auslass des Kanales auf einer größeren geodätischen Höhe befindet als der Einlass, so dass eine Aufwärtsströmung stattfindet, in der auch eingeschlossene Luft mitgenommen wird. Bei dem anderen der beiden Kanäle ist dies jedoch nicht der Fall. Dort liegt der Auslass des Strömungskanales unterhalb des Einlasses. Dies bedeutet, dass in diesem letztgenannten Kanal eintretendes Medium Luft mitschleppt, dass auf diese Luft jedoch keine Auftriebskräfte einwirken, so dass sich Luftpolster ansammeln können, die von Zeit zu Zeit in den Bereich der Drucktaschen gelangt und sich in oben beschriebener Weise nachteilig auf das Arbeitsverhalten des Stützquellensystems auswirkt.

Die Erfindung ist anhand der Zeichnung näher erläutert. Darin ist im einzelnen folgendes dargestellt:
- Figur 1: zeigt in einem achssenkrechten Schnitt eine Durchbiegungsausgleichswalze.
- Figur 2: zeigt in vergrößerter Darstellung eine erste Ausführungsform einer Stützquelle in einem Schnitt, gelegt durch deren Längsachse.
- Figur 3: zeigt eine zweite Ausführungsform einer Stützquelle, wiederum in einem Schnitt gelegt durch deren Längsachse.
- Figur 4: zeigt eine abgewandelte Ausführungsform der Stützquelle gemäß Figur 2.
- Figur 5: zeigt eine abgewandelte Ausführungsform der Stützquelle gemäß Figur 3.

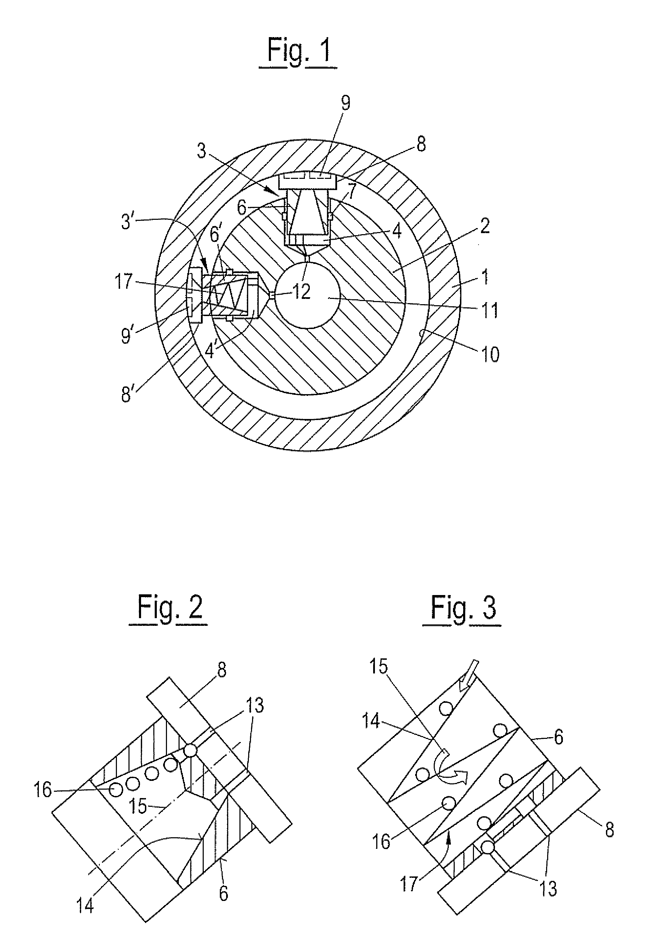

Die in Figur 1 dargestellte Walze ist Bestandteil eines Kalanders für die Papierindustrie. Es könnte sich dabei auch um einen Kalander für andere Anwendungszwecke handeln, beispielsweise für die Textilindustrie. Die Konfiguration gemäß Figur 1 ist wohl gemerkt nur eine beispielhafte Ausführungsform, genau wie alle anderen Figuren.

Die Walze ist eine Durchbiegungsausgleichswalze, die als Unterwalze eines Walzenpaketes fungiert. Sie könnte ebenso gut Bestandteil einer Walzenpresse sein.

Sie umfasst einen Walzenmantel 1, der drehbar gelagert ist. Sie umfasst ferner ein feststehendes Joch 2, das aufgrund seiner Dimensionierung ein erhebliches Widerstandsmoment aufweist. Sie umfasst ferner eine Reihe von oberen Stützquellen 3, deren Längsachsen vertikal verlaufen, sowie eine seitliche Reihe von Stützquellen 3', deren Längsachsen in einer Horizontalebene verlaufen.

Das Joch 2 ist mit Gleitbohrungen 4 versehen, in die die Stützquellen 3 eintauchen und in Stützrichtung eine Gleitbewegung ausführen können.

Jede Stützquelle umfasst eine Buchse 6. Dieser ist durch eine Dichtung 7 gegen die Gleitbohrung 4 abgedichtet. An die Buchse schließt sich radial außen ein Stützschuh 8 an. Dieser kann mit der Buchse 6 einteilig sein. Die Stützquelle 3 kann aber auch aus zwei getrennten Teilen bestehen.

Der Stützschuh 8 weist Lagertaschen 9 auf. Diese sind der Innenfläche 10 des Walzenmantels 1 zugewandt und gegen diese hin offen.

Wie man aus Figur 1 sieht, ist die Buchse 6 hohl. Seine Wandung umgibt einen Hohlraum, der kegelstumpfförmig ist. Das kleinere Ende des Kegelstumpfes befindet sich radial außen, das heißt in der Nähe des Walzenmantels 1.

Das Joch 2 weist eine Bohrung 11 auf. Im vorliegenden Falle ist dies eine Zentralbohrung. Sie könnte jedoch auch exzentrisch zum Joch angeordnet sein. Im übrigen braucht das Joch 2 nicht unbedingt kreisförmigen Querschnitt zu haben, auch andere Querschnitte kämen in Betracht.

Der Zentralbohrung 11 wird ein Druckmedium zugeführt, im allgemeinen ein Öl. Das Druckmedium gelangt durch einen Einlass 12 zur Gleitbohrung 4 einer jeden Stützquelle und weiter in den Hohlraum der Buchse 6. Es tritt sodann durch Kapillarbohrungen 13 im Stützschuh zu den Lagertaschen 9 hindurch. Dabei ist die Anordnung derart getroffen, dass während des Betriebes ein gewisser Leckölstrom durch enge Spalte zwischen dem Stützschuh 8 und der Innenfläche 10 des Walzenmantels 1 hindurchtritt. Es findet eine Anpressung der Stützquelle gegen den Walzenmantel 1 statt, und damit ein Durchbiegungsausgleich. Da eine größere Anzahl von Stützquellen vorgesehen sind, und zwar in der genannten oberen Reihe mit vertikaler Anpressachse, und in der seitlichen Reihe mit horizontalen Anpressachsen, lässt sich der Anpressdruck über die Walzenbreite dosieren und damit der Durchbiegungsausgleich über die Walzenbreite variieren.

Die Stützquellen 3' der genannten seitlichen Reihe von Stützquellen - horizontale Anpressrichtung - sind grundsätzlich nicht anders aufgebaut, als die Stützquellen 3 der vertikalen Reihe von Stützquellen. Auch sie weisen jeweils eine Gleitbohrung 4', eine Buchse 6', einen Stützschuh 8' sowie Lagertaschen 9' auf.

Ein Unterschied liegt darin, dass jede Buchse 6' an ihrem Innenumfang mit einer spiraligen Rippe 17 versehen ist. Siehe auch Figur 3.

Wie man aus Figur 1, aber noch besser aus Figur 2 erkennt, ist der Hohlraum der Buchse 6 kegelstumpfförmig. Der Hohlraum der Buchse 6 gemäß Figur 2 wird somit von Führungsflächen 14 begrenzt, die gegen die Längsachse 15 der gesamten Stützquelle geneigt sind. Die Längsachse ist zugleich die Achse der Anpressung gegen den Walzenmantel 1.

Die in Figur 2 gezeigte Stützquelle könnte in jener Position eingesetzt werden, in der sich die Stützquellen 3' in Figur 1 befinden. So wie sie hier dargestellt ist, könnte sie auch in der oberen Hälfte der Durchbiegungsausgleichswalze angeordnet werden. In allen diesen Fällen leiten ihre Führungsflächen 14 etwa vorhandene Luftblasen nach oben, und verhindern, dass sich Luft anstaut. Die Luftblasen werden durch den hydrostatischen Auftrieb stets zu den Kapillarbohrungen 13 und durch diese hindurchgeführt, so dass sie in die Lagertaschen 9 gelangen und von dort abgeführt werden. Die Stützquellen können somit in verschiedenen Einbaulagen in der oberen Hälfte der Durchbiegungsausgleichswalze gemäß Figur 1 eingesetzt werden.

Anders ist es bei der Ausführungsform von Stützquellen gemäß Figur 3. Diese arbeiten "nach unten", das heißt sie sind in der unteren Hälfte der Durchbiegungsausgleichswalze gemäß Figur 1 anzuordnen. Dabei ist eine Entlüftung durch hydrostatischen Auftrieb nicht möglich. Stattdessen wird der Ölzulauf - siehe die fetten Pfeile - in den Raum unterhalb der Stützquelle derart gerichtet, dass sich eine tangentiale Strömungskomponente ergibt. Bei der Ausführungsform gemäß Figur 3 ist ein schraubenlinienförmiger oder spiralförmiger Führungskörper 17 in eine Buchse 6 eingelegt. Der Führungskörper ist derart gestaltet, dass er im Einlaufbereich möglichst parallel von Drucköl angeströmt wird. Die Luftblasen sammeln sich vorzugsweise im Bereich der Buchse 6 an. Sie werden von einer tangentialen Strömung erfasst. Aufgrund der Schraubenlinienform oder Spiralform wird die Strömung in Richtung der Kapillarbohrungen 13 zwangsgeführt. Der Hohlraum der Buchse 6 wird somit entlüftet.

Bei beiden Lösungen - gemäß Figur 2 oder gemäß Figur 3 - liegt der Vorteil der Erfindung in einer definierten Entlüftung der Stützquellen, sobald ein Volumenstrom diesen zugeleitet wird. Das Ergebnis ist ein sicherer Betrieb und günstige Schwingungszustände. Die Buchsen 6 können durch Führungskörper erfindungsgemäß gestaltet oder umgestaltet werden, im Falle der Ausführungsform gemäß Figur 2 durch kegelstumpfförmige Einsätze, und im Falle der Figur 3 durch spiralige oder schraubenlinienförmige Führungskörper 17.

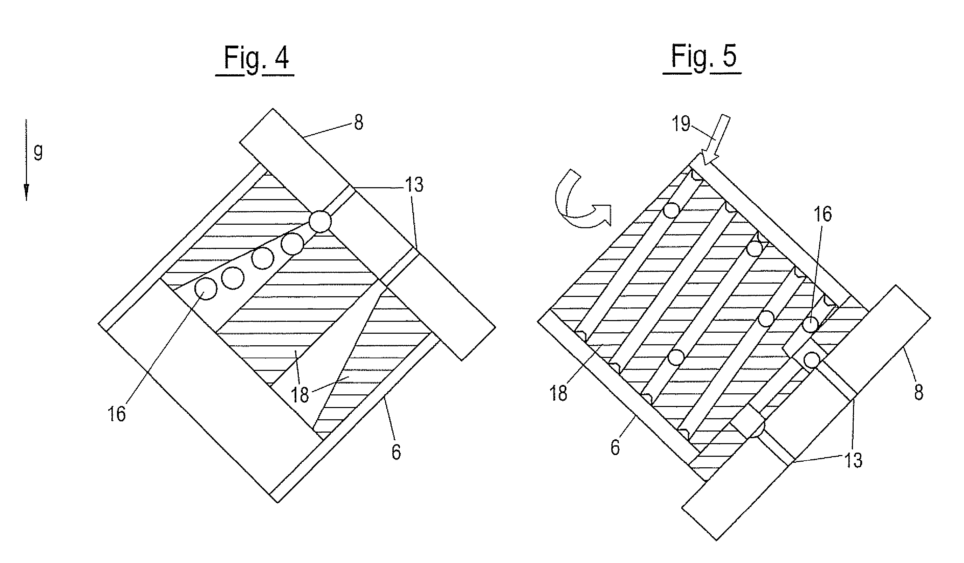

Die Figuren 4 und 5 zeigen Stützquellen, die gegenüber den Figuren 2 und 3 etwas abgewandelt sind. Der Unterschied liegt darin, dass die Hohlräume der Buchse 6 jeweils Füllkörper 18 enthält. Im Falle der Stützquelle gemäß Figur 4 ist dies ein zentraler Zylinder - hohl oder massiv, umgeben von einem kegelstumpfförmigen Körper. Im Falle der Stützquelle gemäß Figur 5 ist dies ein spiralförmiger Leitkörper 18. Durch die genannten Füllkörper wird die Strömung gezwungen, einen kanalartigen Strömungsweg zu nehmen, so dass Luftblasen keine Chance haben, sich in toten Ecken festzusetzen. Bei Stützquelle gemäß Figur 5 ist der tangentiale Strömungseinlass durch Pfeil 19 veranschaulicht.

Durch die Erfindung wird im einzelnen folgendes ermöglicht:
- Die erfindungsgemäßen Stützkörper lassen sich in verschiedenen Positionen einbauen, die mit konventionellen Stützkörpern zu Problemen bezüglich der Ansammlung von Luft führen würden.
- Die erfindungsgemäßen Stützquellensysteme erlauben ein Abführen von eingeschlossener Luft, entweder nach dem Wirkprinzip des hydrostatischen Auftriebs, oder der Verdrängung durch eine gerichtete Strömung.
- Es wird eine Entlüftung von Stützquellen auch bei schräg oder über Kopf eingebauten Stützquellen möglich.
- Es verbleibt kein Restluftanteil, der die Eigenfrequenz des Systems beeinträchtigt oder zu einer verschlechterten Tragfähigkeit des hydrostatischen Lagers führt.
- Das Ölvolumen unterhalb des Stützquellenkopfes kann beliebig verändert werden.
- Ein Umbau von vorhandenen Anlagen ist möglich.

### Bezugszeichenliste

- 1: Walzenmantel
- 2: Joch
- 3,3': Stützquellen
- 4: Gleitbohrung
- 6: Buchse
- 7: Dichtung
- 8: Stützschuh
- 9: Lagertasche
- 10: Innenfläche des Walzenmantels
- 11: Zentralbohrung
- 12: Einsatz
- 13: Kapillarbohrung
- 14: Führungsfläche
- 15: Längsachse der Stützquelle
- 16: Luftblasen
- 17: Führungskörper
- 18: Füllkörper
- 19: tangentialer Strömungseinlass

## Patentansprüche

1. Stützquellensystem für eine Durchbiegungsausgleichswalze, die einen drehbar gelagerten Walzenmantel (1) aufweist, ein feststehendes, vom Walzenmantel umschlossenes Joch (2) sowie mehrere Stützquellen (3, 3'), die zwischen Walzenmantel (1) und Joch (2) über die Walzenbreite verteilt angeordnet sind,
- mit einem Stützschuh (8), der sich gegen die Innenfläche (10) des Walzenmantels (1) abstützt und gegen diese hin offene Lagertaschen (9) aufweist sowie Kapillarbohrungen (13), die an den Lagertaschen (9) münden;
- mit einer mit dem Stützschuh (8) fest verbundenen oder einteiligen zylindrischen Buchse (6), die in eine Gleitbohrung (4) im Joch (2) eintaucht, und die einen Druckmediumanschluss (12) zum Leiten eines Druckmediums zu den Lagertaschen (9) aufweist;
**gekennzeichnet durch** die folgenden Merkmale:
- die Buchse (6) umschließt einen Hohlraum, der sich über die gesamte Buchsenlänge oder einen wesentlichen Teil hiervon erstreckt;
- der Hohlraum weist Führungsflächen (14) auf, die gegen die Längsachse (15) der Buchse (6) geneigt sind.

2. Stützquellensystem nach Anspruch 1, **dadurch gekennzeichnet, dass** der Hohlraum der Buchse (6) den größeren Teil des Volumens der Buchse (6) einnimmt.

3. Stützquellensystem nach Anspruch 1 oder 2, **dadurch gekennzeichnet, dass** die Führungsflächen (14) nach Art eines Kegelstumpfes gestaltet sind, dessen kleineres Ende sich in der Nähe des Stützschuhs (8) befindet.

4. Stützquellensystem nach Anspruch 1 oder 2, **dadurch gekennzeichnet, dass** die Führungsflächen (14) spiralig oder schraubenlinienförmig gestaltet sind.

5. Stützquellensystem nach einem der Ansprüche 1 bis 4, **dadurch gekennzeichnet, dass** die Führungsflächen (14) aus einem Führungskörper (17) gebildet sind.

6. Stützquellensystem nach Anspruch 5, **dadurch gekennzeichnet, dass** der Führungskörper (17) ein Einsatz ist, der in die Buchse (6) eingefügt ist.

7. Stützquellensystem nach einem der Ansprüche 1 bis 6, **dadurch gekennzeichnet, dass** der von der Buchse (6) umschlossene Hohlraum Füllkörper (18) aufweist, die die Strömungsquerschnitte verringern.
